# EUROPEAN PATENT SPECIFICATION

(11) **EP 1 501 236 B1**
(45) Date of publication and mention of the grant of the patent: **25.06.2008**
(21) Application number: 03254603.8
(22) Date of filing: 24.07.2003
(51) Int. Cl.: H04L 9/08

(54) **Error correction for cryptographic keys**
Fehlerkorrektur für kryptographische Schlüssel
Correction d'erreurs pour clés cryptographiques

(43) Date of publication of application: 26.01.2005
(73) Proprietor: Hitachi, Ltd., Chiyoda-ku, Tokyo 101-8010 (JP)
(72) Inventor: Okochi, Toshio, Cambridge CB4 1PZ (GB)
(74) Representative: Walaski, Jan Filip

(56) References cited:
- EP-A- 1 020 856
- PATENT ABSTRACTS OF JAPAN vol. 010, no. 285 (E-441), 27 September 1986 (1986-09-27) & JP 61 103334 A (OKI ELECTRIC IND CO LTD), 21 May 1986 (1986-05-21)
- SKOROBOGATOV S P ET AL: "Optical fault induction attacks" CRYPTOGRAPHIC HARDWARE AND EMBEDDED SYSTEMS - CHES 2002. 4TH INTERNATIONAL WORKSHOP REVISED PAPERS (LECTURE NOTES IN COMPUTER SCIENCE VOL.2523), CRYPTOGRAPHIC HARDWARE AND EMBEDDED SYSTEMS - CHES 2002. 4TH INTERNATIONAL WORKSHOP REVISED PAPERS, REDWO, pages 2-12, XP002266187 2002, Berlin, Germany, Springer-Verlag, Germany ISBN: 3-540-00409-2

## Description

The present invention relates to cryptographic protection, particularly but not exclusively to using error correction codes for preventing unauthorised key reading from smart cards and other cryptographic devices.

Smart cards are typically credit card sized devices that contain an integrated circuit. There are various types of cards, including memory cards where the integrated circuit is a memory device and processor cards where the integrated circuit includes a microprocessor as well as memory. These are considerably more powerful than the more basic and already widely used memory cards and, in combination with appropriate cryptographic protocols, have many potential applications, not least in the field of electronic commerce.

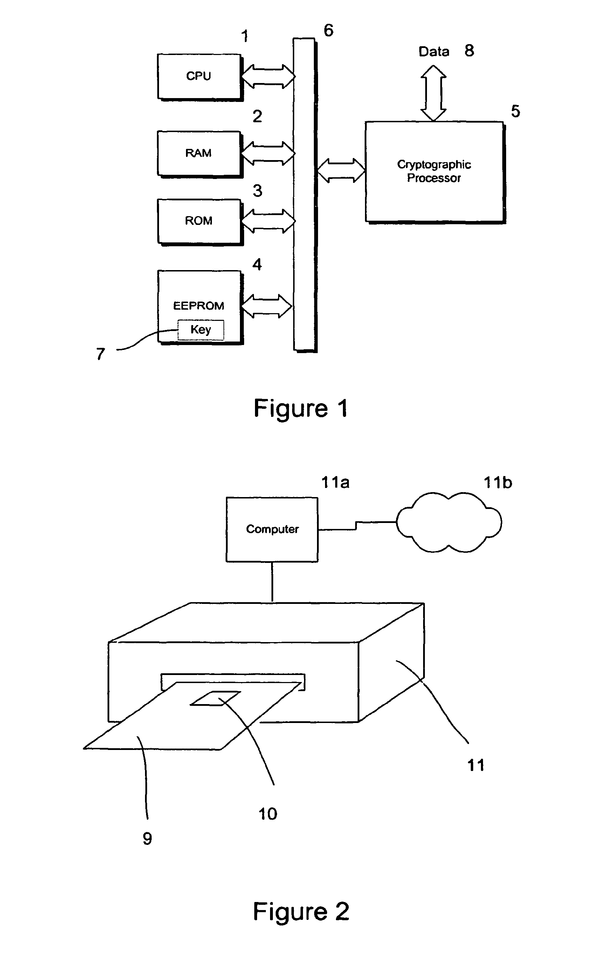

Conventional smart card circuitry is illustrated in Figure 1. This includes a central processing unit (CPU) 1, random access memory (RAM) 2, for example static RAM (SRAM), a read-only memory (ROM) 3, some form of programmable read-only memory (PROM), for example electrically erasable PROM (EEPROM) 4 and a cryptographic processor 5. The components communicate via a common bus 6. The cryptographic processor may implement any one or more of a number of different cryptographic algorithms. Typically, a secret cryptographic key 7 is stored in the EEPROM 4. When a transaction involving the smart card is to be executed, the key 7 is retrieved from the EEPROM 4 and sent to the cryptographic processor 5, where it is used in combination with a particular cryptographic algorithm to provide an encrypted or decrypted data output at an output port 8. The cryptographic key 7 itself is not available at the output 8, since the security of the device relies on the key being kept secret. The key may, however, be temporarily stored in the RAM 2 during the transaction.

Of course, if it were possible to directly read the values stored in the EEPROM 4 or RAM 2, for example, from their charge, the secret key 7 could be easily determined. However, such attacks are technologically difficult as well as expensive to mount.

Recently, a number of relatively easy and low cost attacks have been developed, which permit data to be indirectly read from the smart card memory 2, 4. These attacks have the potential to determine the secret key 7. The attacks involve deliberately manipulating a single bit of a memory cell, data register or signal line, by setting the bit to a fixed value, 'zero' or 'one' and comparing the results of a cryptographic transaction with and without manipulation. If the fixing of a single bit of the key results in a change in the value of that bit, the result of the transaction will be different to that without manipulation. On the other hand, if the result of the transaction is the same with and without manipulation, then the attacker knows that the value of the bit is the same as the fixed value. By manipulating the value of every key bit, the attacker can read out the bit sequence of the key 7. This could happen, for example, when the key is used for challenge-response type authentication, or is the secret key of a public cryptography algorithm used for digital signatures, unless effective protection against repeated transactions is provided.

The manipulation can be done using simple technologies, for example, using a photographic flash to make an SRAM cell stick to a fixed value. Other possible technologies include the use of induced eddy currents, which have a similar effect on logic circuits. Reference is directed to "On a New Way to Read Data from Memory", Samyde, Skorobogatov, Anderson, Quisquater, SISW2002 First International IEEE Security in Storage Workshop, which explains a family of techniques for extracting data from semiconductor memory. These involve semi-invasive probing methods for inducing measurable changes in the analogue characteristics of the memory cells of interest. The methods include optical probing, in which a laser is used to induce a transient fault in a gate so as to cause information leakage and an eddy current based method in which a small coil is brought close to the surface of a chip to induce a large transient magnetic field. Optical probing methods using a photoflash lamp are further disclosed in 'Optical Fault Induction Attacks', Skorobogatov, Anderson, Workshop on Cryptographic Hardware and Embedded Systems (CHES 2002) Redwood City, USA. August 13-15, 2002.

The present invention aims to provide countermeasures for the above disclosed and similar probing methods.

European Patent No. EP1020856 discloses a data protection method using a decryption key concealed in a compliant mark. JP 61103334 discloses a system that applies error correction coding after a master key is scrambled.

According to the present invention, there is provided cryptographic apparatus according to claim 1.

By correcting the key prior to its use in a cryptographic transaction to encrypt/decrypt data, an attacker attempting to manipulate individual bits of the key is prevented from knowing whether the attack has been successful.

The error correcting means can include an error correction code associated with the stored key.

The error correcting means can be provided to protect intermediate key values, for example as used in the DES algorithm, so further enhancing security.

Disguising the operation of the error correcting means may be done by providing first and second signal lines, where the first signal line indicates the presence or absence of a bit error in the key, and the second signal line is arranged to switch to a logic level opposite to that on the first signal line. This technique may help to prevent so-called side-channel attacks, where an attacker attempts to use changes in signal levels, current profiles and so on, to determine whether the error correcting means is reacting to the presence of an error.

The cryptographic apparatus may comprise a smart card or any other type of device with a cryptographic computation function.

According to the invention, there is further provided a method of executing a cryptographic transaction according to claim 9. The cryptographic processing and error correction may be implemented in dedicated hardware or in software.

Embodiments of the invention will now be described, by way of example, with reference to the accompanying drawings, in which:
Figure 1 is a schematic diagram of conventional smart card circuitry;
Figure 2 is a schematic diagram of a smart card and corresponding smart card reader;
Figure 3 is a schematic diagram illustrating smart card circuitry in accordance with the invention;
Figure 4 is a flow diagram illustrating the execution of a cryptographic transaction in accordance with the invention;
Figure 5 is a schematic illustration of a cryptographic processing circuit using the well-known DES algorithm;
Figure 6 is a schematic illustration of a cryptographic processing circuit using the well-known RSA algorithm;
Figure 7 is a schematic illustration of an error correcting circuit using a cyclic redundancy code (CRC) for error correction;
Figure 8 shows the circuit of Figure 7 with output and error states.

Figure 2 illustrates an example of a smart card 9 including embedded microprocessor circuitry 10, for use with a smart card reader 11, which is connected to a computer 11a and ultimately to a network 11b, such as the Internet, shown schematically. The basic principles of smart cards and their use with card readers are well known and will not be described further here.

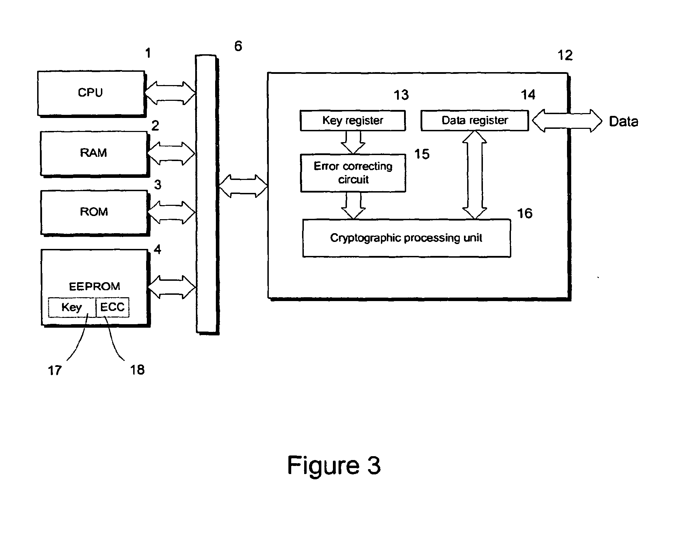

Figure 3 illustrates the microprocessor circuitry 10 of a smart card 9 in accordance with the invention. The circuitry 10 comprises a CPU 1, volatile memory 2, in the form of SRAM, non-volatile memory 3, in the form of ROM, programmable ROM, in the form of EEPROM 4 and a cryptographic processor 12, interconnected by a common bus 6. The cryptographic processor 12 includes a key register 13, a data register 14, an error correcting circuit 15 and a cryptographic processing unit 16. The cryptographic processing unit 16 can be implemented in hardware or software based on any desired type of cryptographic algorithm, as will be described in more detail below.

The smart card 9 stores, in the EEPROM 4, a secret cryptographic key 17 together with an associated error correction code ECC 18. The key register 13 in the cryptographic processor 12 is configured to store both the key 17 and the error correction code 18. The set-up of the key 17 and its associated ECC code 18 in the smart card 9 is typically made during the card initialisation and issuing process.

The principles behind error correction codes, also known as error detection and correction codes, are well-known. In the implementation of this invention, any error correction code and its corresponding error correction circuitry can be used. Such codes include BCH codes, Golay codes, Hamming codes, cyclic redundancy codes and Reed-Solomon codes.

The choice of code depends on the size of the keys used in the particular cryptographic algorithm, the number of errors to be corrected, hardware limitations and so on. At a basic level, a code capable of correcting single bit errors is used. If a higher level of security is required, codes with the capability to correct multiple errors, such as the Reed-Solomon code, can be used. A particular example of an error correction code and circuit will be described later in this specification.

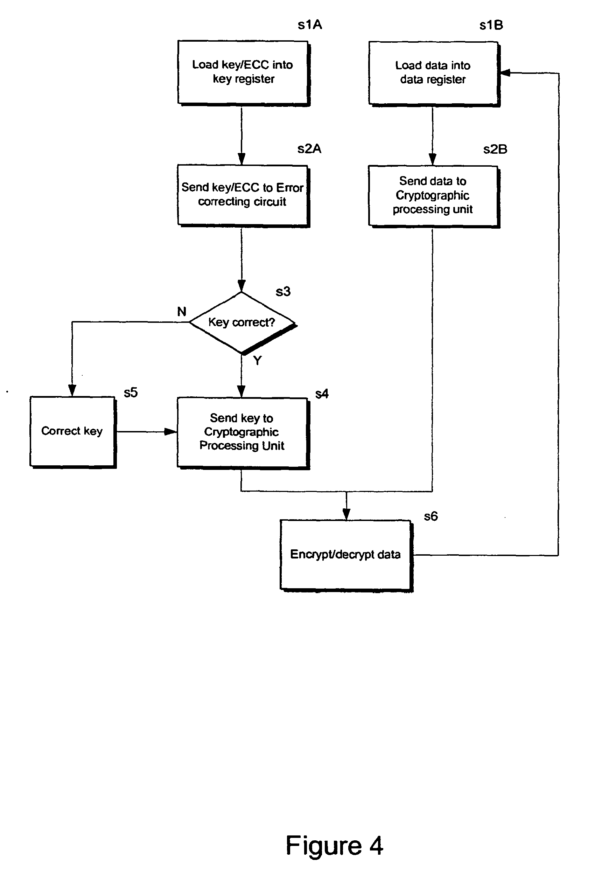

The execution of a smart card transaction will now be described, with reference to Figure 4. A smart card transaction is initiated when data is required to be encrypted or decrypted, for example when performing an e-commerce transaction or when receiving scrambled data for a television broadcast. Application software running on the smart card, stored, for example, in the ROM 3, loads the key 17 and the ECC code 18 from the EEPROM 4 into the key register 13 (step s1A). Depending on the application software, the key/ECC code sequence 17, 18 may also be temporarily loaded into the RAM 2. A data word to be encoded/decoded is also loaded into the data register 14 (step s1B)

The key 17 and ECC code 18 are then passed to the error correcting circuit 15 (step s2A) and the data word is sent to the cryptographic processing unit 16 (step s2B). The error correcting circuit 15 uses the ECC code 18 to determine whether the key 17 is correct (step s3), as will be described in more detail below. If the key is correct, it is passed to the cryptographic processing unit 16 (step s4). If it is not correct, it is corrected by the error correcting circuit 15 (step s5) and then sent on to the cryptographic processing unit (step s4). The cryptographic processing unit then uses the key to encrypt/decrypt the data word in accordance with the selected cryptographic algorithm (step s6) and program control then returns to load the next data word for processing (step s1B).

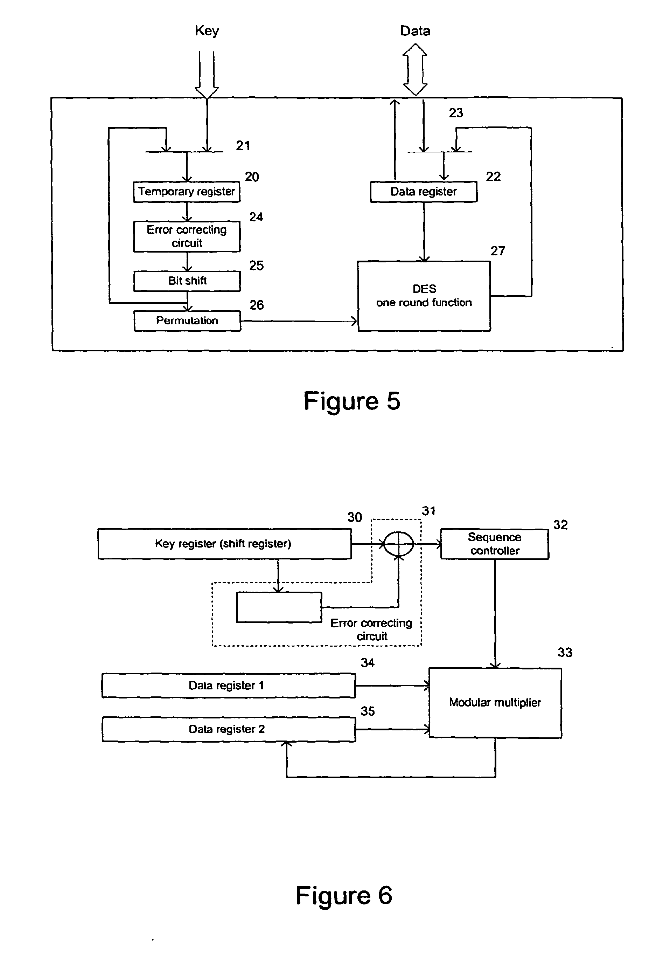

Examples of the system in conjunction with particular cryptographic algorithms will now be described with reference to Figures 5 and 6.

Figure 5 illustrates a cryptographic processing unit 16 that conforms to the well-known Data Encryption Standard (DES) algorithm. DES is a block cipher that encrypts data in 64-bit blocks, taking in a 64-bit block of plaintext and converting it to a 64-bit block of ciphertext. It comprises 16 rounds of a non-linear function, each round using a different round key, which is generated by rotation and bit selection/permutation of the original key. Full details of the algorithm and its implementation are well known and will not be described in detail here.

The DES cryptographic processing unit 16 shown in Figure 5 receives the corrected key 17 from the error correction circuit 15 and data from the data register 14. The key is fed to a temporary register 20 via a key scheduler 21, which generates an intermediate value from which the round key is generated for each round. The data is stored in a further data register 22 via a data selector 23. To further improve security, the temporary register stores the intermediate key value with an error correction code and an error correction circuit 24 is provided to detect and correct any errors at this stage. Bit shift and permutation modules 25, 26 are provided to generate the round key for the relevant round in accordance with the DES algorithm and this is then passed to the DES one round function 27. The output from the DES function 27 is fed back to the data register 22 via the data selector 23, ready for the next round.

Figure 6 illustrates a cryptographic processing unit which conforms to the well-known RSA algorithm. RSA computation consists of modular exponentiation with a secret key as an exponent. The most well-established and efficient method of computing modular exponentiation is known as the square-and-multiply method. A block diagram of a circuit for implementing this method is shown in Figure 5. The circuit comprises a key register 30, which is a shift register, storing the secret key together with an error correction code. This corresponds to the key register 13 shown in Figure 3. An error correcting circuit 31 is provided to check and correct the key and the correct key is fed to a sequence controller 32 and then on to a modular multiplier unit 33 which also receives data from first and second data registers 34, 35, which effectively make up the data register 14 shown in Figure 3. In this example, the use of an error correcting circuit 31 using a cyclic redundancy code (CRC) is an efficient way of reducing the RSA hardware requirements. This is because error correction using this code provides for sequential bit-by-bit processing so that a logic circuit for single bit error correction can be repeatedly used by simply rotating the input data sequence. The hardware size of the error correction circuit can therefore be much smaller compared to other error correction methods that are required to correct blocks of data concurrently. Although the use of a CRC code generally requires a longer processing time to achieve overall error correction, this is not an issue in modular exponentiation using the square-and-multiply method, since the exponent is in any case used sequentially from lower bit to higher bit.

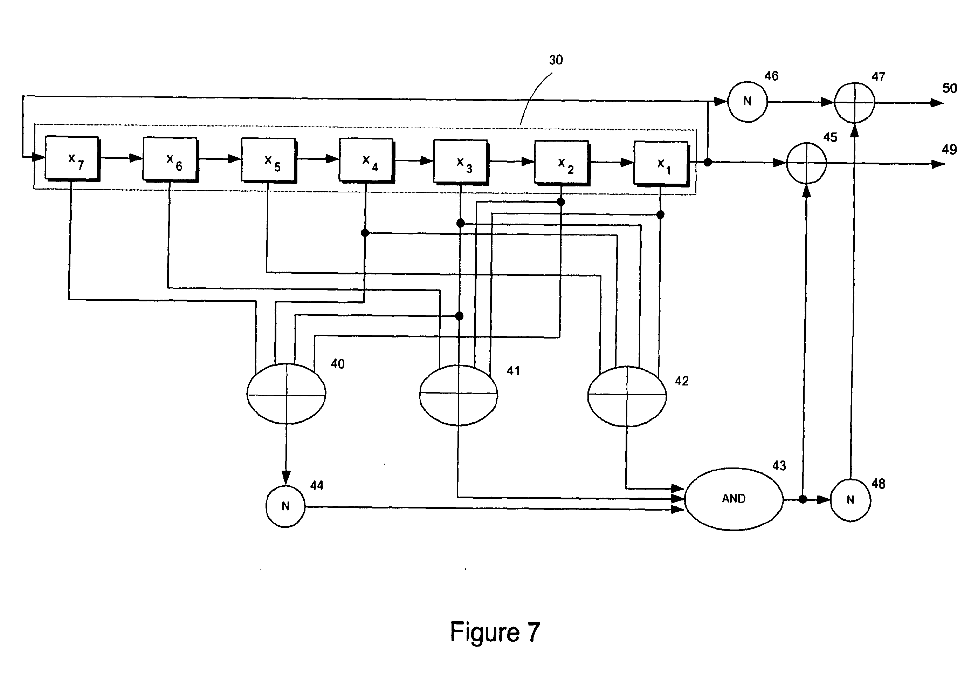

A CRC-based error correcting circuit will now be described with reference to Figure 7. In this example, a three bit error correction code is used for every four bits of data and is generated by multiplying each four bit data word by the following 7 x 4 matrix:
[1000
0100
0010
0001
1011
1110
0111]

The first four rows of the matrix place the four-bit data word into the four most significant bits of a seven-bit word. The last three rows generate the appropriate three-bit error correction code for the data word. For example, the data word [1011] is transformed into [1011100] and the data word [0010] is transformed into [0010111], obtained by simple matrix multiplication.

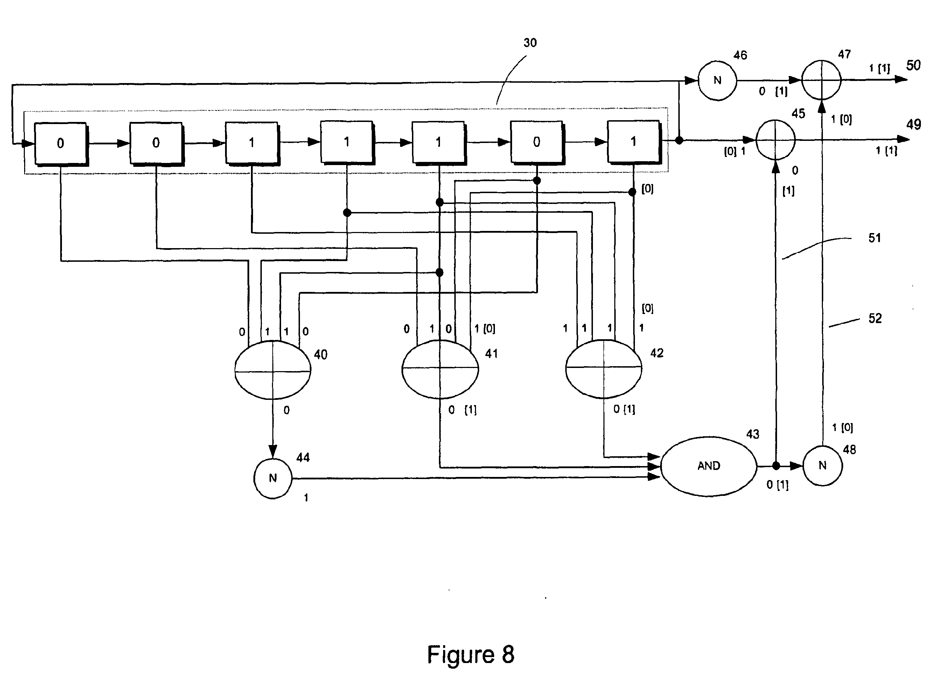

Referring to Figures 7 and 8, the seven-bit word to be checked is loaded into the shift register 30, most significant bit (x₁) first, so that the word 1011100 appears in the shift register in the sequence 0011101, as shown in Figure 8.

The individual bits x₁ - x₇ of the register 30 are connected to three 4-input exclusive-or (XOR) gates 40, 41, 42. The outputs of these XOR gates are in turn fed into the input of an AND gate 43. In the case of a first XOR gate 40, its output is first inverted via an inverter (NOT gate) 44 before being fed into the AND gate 43. The first bit x₁ of the register 30 is also connected to the input of a first 2-input XOR gate 45, the other input of which comes from the output of the AND gate 43. The output of this XOR gate 45 is the corrected original data bit x₁.

The first bit x₁ of the register 30 is in addition connected via a second inverter 46 to a second 2-input XOR gate 47. The second input to this XOR gate 47 comes from the output of the AND gate 43 via a third inverter 48.

The first bit x₁ of the register 30 is also connected to the seventh bit x₇, which is the least significant bit of the data word. Since the desired data bits reside in the four first bits x₁ - x₄ of the register 30, it takes four shifts to the right to read out the corrected four-bit data word at the output 49.

The basic principle of operation of the error correction circuit is shown over one cycle in Figure 8, using the 7-bit word 1011100. The resulting outputs of the various gates are shown in Figure 8, ignoring the figures in square brackets at this stage. The output of the AND gate 43 is '0', indicating that bit x₁ is correct. The '0' input applied to the first 2-input XOR gate 45 means that the first bit x₁ is passed through to the output 49 unchanged. However, to ensure that the current profile detectable from outside the integrated circuit is the same regardless of the existence of errors, the output of the AND gate 43 is inverted by the third inverter 48 and XOR'd by the second 2-input XOR gate 47 with the inverted first bit x₁. The effect of this is to produce bit x₁ on the dummy output line 50. The overall result of this arrangement is that a first signal line 51, which indicates the presence or absence of a bit error on bit x₁, is accompanied by a second signal line 52 with the opposite logic level. Since one of the two lines 51, 52 will always be active regardless of whether a bit error exists or not, an attacker cannot use the fact that a particular gate turns on or off to determine the existence of the error. Such attacks are referred to as side-channel attacks.

On the assumption that the bit x₁ has been manipulated to '0', as shown by the numbers in square brackets in Figure 8, the resulting output from the second and third 4-input XOR gates 41, 42 would be '1', so that the output from the AND gate 43 would be '1', indicating that bit x₁ is incorrect. The effect of XOR'ing at the first 2-input XOR gate 45 is now that bit x, is inverted, resulting in it being corrected to '1'. The opposite logic transaction occurs at the second 2-input XOR gate 47 resulting in the same output bit at the dummy output 50.

As stated above, although this example of an error correction code is particularly advantageous for use with the RSA algorithm, other error correction codes could be used with this algorithm and this code could also be used for other types of algorithm. Furthermore, the invention extends not only to any code which is capable of being used for error correction, but to any other technique which would enable correction of a cryptographic key prior to its use to encrypt/decrypt data.

In a further example of the invention, the cryptographic processor 12 shown in Figure 3 is not implemented in hardware, but in software. In this case, the CPU 1 or a co-processor implement the functionality of the cryptographic processor and the error correcting circuit. The operation of the software is configured to prevent side-channel attacks, so that the existence and correction of an error cannot be detected by an attacker.

While the invention has been described in relation to a smart card 9, it is not limited to a credit-card sized smart card insertable into a card-reader. Smart card technology is constantly developing and the term can be extended to any equipment having similar functionality. For example, mobile phones may be 'swiped' at a reader terminal and the cost of a train or cinema ticket debited to the user's account. In this case, the phone is acting as a smart card.

Furthermore, the invention extends not only to smart cards and devices having smart card functionality, but also to any device in which a cryptographic transaction can take place and where protection for some part of the cryptographic code is required.

## Claims

1. Cryptographic apparatus comprising:
storage means (4) for storing a cryptographic key (17);
means for retrieving a stored key from the storage means;
error correcting means (15) for correcting the retrieved key; and
cryptographic processing means (16) for computing a result using the corrected key, **characterised by**:
means for disguising operation of the error correcting means.

2. Cryptographic apparatus according to claim 1, wherein the error correcting means includes an error correction code (18) associated with the stored key.

3. Cryptographic apparatus according to claim 1 or 2, comprising an error correction circuit (15) for correcting the key based on the error correction code.

4. Cryptographic apparatus according to any one of the preceding claims, wherein the storage means comprises a programmable memory.

5. Cryptographic apparatus according to any one of the preceding claims, wherein the storage means comprises a register.

6. Cryptographic apparatus according to any one of the preceding claims, wherein an intermediate value is stored, from which the key is arranged to be calculated, further comprising means for correcting errors in the intermediate value.

7. Cryptographic apparatus according to any one of the preceding claims, wherein a first signal line (51) indicates the presence or absence of a bit error in the key, the disguising means comprising a second signal line (52) arranged to switch to a logic level opposite to that on the first signal line.

8. Cryptographic apparatus according to any one of the preceding claims, comprising a smart card (9).

9. A method of executing a cryptographic transaction, comprising the steps of:
retrieving a stored cryptographic key (17);
error correcting the retrieved key; and
computing a result using the corrected key, **characterised by**:
disguising the step of error correcting the key.

10. A method according to claim 9, comprising storing an error correction code (18) in association with the stored key.

11. A method according to claim 10, comprising correcting the retrieved key based on the error correction code.

12. A method according to any one of claims 9 to 11, wherein a first signal line (51) indicates the presence or absence of a bit error in the key, and disguising the step of correcting the key comprises switching a second signal line (52) to a logic level opposite to that on the first signal line.

13. A computer program which, when executed on a computer, is configured to perform the method of any one of claims 9 to 12.

## Patentansprüche

1. Kryptografisches Gerät, umfassend:
eine Speichereinrichtung (4) zum Speichern eines kryptografischen Schlüssels (17);
einer Einrichtung zum Erlangen eines gespeicherten Schlüssels von der Speichereinrichtung;
eine Fehlerkorrektureinrichtung (15) zum Korrigieren des erlangten Schlüssels; und
eine kryptografische Verarbeitungseinrichtung (16) zum Berechnen eines Ergebnisses unter Verwendung des korrigierten Schlüssels, **gekennzeichnet durch**:
einer Einrichtung zum Verschleiern der Arbeit der Fehlerkorrektureinrichtung.

2. Kryptografisches Gerät nach Anspruch 1, wobei die Fehlerkorrektureinrichtung einen Fehlerkorrekturcode (18) enthält, der dem gespeicherten Schlüssel zugeordnet ist.

3. Kryptografisches Gerät nach Anspruch 1 oder 2, umfassend eine Fehlerkorrekturschaltung (15) zum Korrigieren des Schlüssels basierend auf dem Fehlerkorrekturcode.

4. Kryptografisches Gerät nach einem der vorhergehenden Ansprüche, wobei die Speichereinrichtung einen programmierbaren Speicher enthält.

5. Kryptografisches Gerät nach einem der vorhergehenden Ansprüche, wobei die Speichereinrichtung ein Register enthält.

6. Kryptografisches Gerät nach einem der vorhergehenden Ansprüche, wobei ein Zwischenwert gespeichert wird, aus dem der Schlüssel zu berechnen ist, ferner umfassend eine Einrichtung zum Korrigieren von Fehlern in dem Zwischenwert.

7. Kryptografisches Gerät nach einem der vorhergehenden Ansprüche, wobei eine erste Signalleitung (51) das Vorhandensein oder das Fehlen eines Bitfehlers in dem Schlüssel anzeigt, wobei die Verschleierungseinrichtung eine zweite Signalleitung (52) umfasst, die dazu ausgelegt ist, auf einen Logikpegel zu schalten, der jenem auf der ersten Signalleitung entgegengesetzt ist.

8. Kryptografisches Gerät nach einem der vorhergehenden Ansprüche, umfassend eine Chipkarte (9).

9. Verfahren zum Ausführen einer kryptografischen Transaktion, umfassend die Schritte:
Erlangen eines gespeicherten kryptografischen Schlüssels (17);
Fehler-Korrigieren des erlangten Schlüssels; und
Berechnen eines Ergebnisses unter Verwendung des korrigierten Schlüssels, **gekennzeichnet durch**:
Verschleiern des Schritts des Fehler-Korrigierens des Schlüssels.

10. Verfahren nach Anspruch 9, umfassend das Speichern eines Fehlerkorrekturcodes (18), der dem gespeicherten Schlüssel zugeordnet ist.

11. Verfahren nach Anspruch 10, umfassend das Korrigieren des erlangten Schlüssels basierend auf dem Fehlerkorrekturcode.

12. Verfahren nach einem der Ansprüche 9 bis 11, wobei eine erste Signalleitung (51) das Vorhandensein oder das Fehlen eines Bitfehlers in dem Schlüssel anzeigt, und wobei das Verschleiern des Schritts des Korrigierens des Schlüssels ein Schalten einer zweiten Signalleitung (52) auf einen Logikpegel umfasst, der jenem auf der ersten Signalleitung entgegengesetzt ist.

13. Computerprogramm, das dazu ausgelegt ist, beim Ausführen auf einem Computer das Verfahren nach einem der Ansprüche 9 bis 12 durchzuführen.

## Revendications

1. Appareil cryptographique comportant :
un moyen de stockage (4) destiné à stocker une clé cryptographique (17) ;
un moyen destiné à récupérer une clé stockée à partir du moyen de stockage ;
un moyen (15) de correction d'erreur destiné à corriger la clé récupérée ; et
un moyen de traitement cryptographique (16) destiné à calculer un résultat en utilisant la clé corrigée,
**caractérisé par** :
un moyen destiné à déguiser une opération effectuée par le moyen de correction d'erreur.

2. Appareil cryptographique selon la revendication 1, dans lequel le moyen de correction d'erreur comprend un code (18) de correction d'erreur associé à la clé stockée.

3. Appareil cryptographique selon la revendication 1 ou 2, comportant un circuit (15) de correction d'erreur destiné à corriger la clé sur la base du code de correction d'erreur.

4. Appareil cryptographique selon l'une quelconque des revendications précédentes, dans lequel le moyen de stockage comporte une mémoire programmable.

5. Appareil cryptographique selon l'une quelconque des revendications précédentes, dans lequel le moyen de stockage comprend un registre.

6. Appareil cryptographique selon l'une quelconque des revendications précédentes, dans lequel une valeur intermédiaire est stockée, à partir de laquelle la clé est agencée de façon à être calculée, comprenant en outre un moyen destiné à corriger des erreurs dans la valeur intermédiaire.

7. Appareil cryptographique selon l'une quelconque des revendications précédentes, dans lequel une première ligne (51) de signal indique la présence ou l'absence d'une erreur de bit dans la clé, le moyen de déguisement comprenant une seconde ligne de signal (52) agencée pour commuter à un niveau logique opposé à celui présent sur la première ligne de signal.

8. Appareil cryptographique selon l'une quelconque des revendications précédentes, comportant une carte à puce (9).

9. Procédé d'exécution d'une transaction cryptographique, comprenant les étapes qui consistent :
à récupérer une clé cryptographique stockée (17) ;
à corriger une erreur de la clé récupérée ; et
à calculer un résultat en utilisant la clé corrigée,
**caractérisé par** :
le déguisement de l'étape de correction d'erreur de la clé.

10. Procédé selon la revendication 9, comprenant le stockage d'un code de correction d'erreur (18) en association avec la clé stockée.

11. Procédé selon la revendication 10, comprenant la correction de la clé récupérée sur la base du code de correction d'erreur.

12. Procédé selon l'une quelconque des revendications 9 à 11, dans lequel une première ligne de signal (51) indique la présence ou l'absence d'une erreur de bit dans la clé, et le déguisement de l'étape de correction de la clé comprend la commutation d'une seconde ligne de signal (52) à un niveau logique opposé à celui présent sur la première ligne de signal.

13. Programme d'ordinateur qui, lorsqu'il est exécuté sur un ordinateur, est configuré pour mettre en oeuvre le procédé selon l'une des revendications 9 à 12.
